# EUROPEAN PATENT APPLICATION

(11) **EP 4 780 100 A1**
(43) Date of publication of application: **22.07.2026**
(21) Application number: 23951932.5
(22) Date of filing: 16.09.2023
(51) Int. Cl.: H04W 72/04

(54) **SIDELINK POSITIONING METHOD AND COMMUNICATION DEVICE**

(71) Applicant: Quectel Wireless Solutions Co., Ltd., Shanghai 201601 (CN)
(72) Inventor: ZHAO, Zheng, Shanghai 201601 (CN)
(74) Representative: Fish & Richardson P.C.
(86) International application number: PCT/CN2023/119269
(87) International publication number: WO 2025/055004

(57) **Abstract**

Disclosed are a sidelink positioning method and a communication device. The sidelink positioning method includes: transmitting, by a first device, first information, wherein the first information is used for determining an RTT between a first terminal device and a second terminal device, and the first information corresponds to a first time period, the first time period including a first time difference, the first time difference being determined based on one or more of: a subframe boundary of the first terminal device; a subframe boundary of the second terminal device; a reception time of a first signal; or a transmission time of a second signal; wherein the first signal is a reference signal for sidelink positioning transmitted by the first terminal device to the second terminal device, and the second signal is a reference signal for sidelink positioning transmitted by the second terminal device to the first terminal device.

## Description

### TECHNICAL FIELD

The present disclosure relates to the technical field of communications, and in particular, relates to a sidelink positioning method and a communication device.

### BACKGROUND

The round trip time (RTT) positioning technique is an effective positioning method. In sidelink positioning, how to reduce positioning errors of the RTT positioning technique is a problem to be urgently solved.

### SUMMARY

Embodiments of the present disclosure provide a sidelink positioning method and a communication device. Various aspects of the present disclosure are described in detail hereinafter.

In a first aspect, a sidelink positioning method is provided. The sidelink positioning method is applicable to a first device, and includes: transmitting first information, wherein the first information is used for determining an RTT between a first terminal device and a second terminal device, and the first information corresponds to a first time period, the first time period including a first time difference, the first time difference being determined based on one or more of: a subframe boundary of the first terminal device; a subframe boundary of the second terminal device; a reception time of a first signal; a transmission time of a second signal; or a synchronization time difference between the first terminal device and the second terminal device; wherein the first signal is a reference signal for sidelink positioning transmitted by the first terminal device to the second terminal device, and the second signal is a reference signal for sidelink positioning transmitted by the second terminal device to the first terminal device.

In a second aspect, a sidelink positioning method is provided. The sidelink positioning method is applicable to a second device, and includes: receiving first information, wherein the first information is used for determining an RTT between a first terminal device and a second terminal device, and the first information corresponds to a first time period, the first time period including a first time difference, the first time difference being determined based on one or more of: a subframe boundary of the first terminal device; a subframe boundary of the second terminal device; a reception time of a first signal; a transmission time of a second signal; or a synchronization time difference between the first terminal device and the second terminal device; wherein the first signal is a reference signal for sidelink positioning transmitted by the first terminal device to the second terminal device, and the second signal is a reference signal for sidelink positioning transmitted by the second terminal device to the first terminal device.

In a third aspect, a communication device is provided. The communication device is a first device, and includes a communication module, configured to transmit first information, wherein the first information is used for determining an RTT between a first terminal device and a second terminal device, and the first information corresponds to a first time period, the first time period including a first time difference, the first time difference being determined based on one or more of: a subframe boundary of the first terminal device; a subframe boundary of the second terminal device; a reception time of a first signal; a transmission time of a second signal; or a synchronization time difference between the first terminal device and the second terminal device; wherein the first signal is a reference signal for sidelink positioning transmitted by the first terminal device to the second terminal device, and the second signal is a reference signal for sidelink positioning transmitted by the second terminal device to the first terminal device.

In a fourth aspect, a communication device is provided. The communication device is a second device, and includes a communication module, configured to receive first information, wherein the first information is used for determining an RTT between a first terminal device and a second terminal device, and the first information corresponds to a first time period, the first time period including a first time difference, the first time difference being determined based on one or more of: a subframe boundary of the first terminal device; a subframe boundary of the second terminal device; a reception time of a first signal; a transmission time of a second signal; or a synchronization time difference between the first terminal device and the second terminal device; wherein the first signal is a reference signal for sidelink positioning transmitted by the first terminal device to the second terminal device, and the second signal is a reference signal for sidelink positioning transmitted by the second terminal device to the first terminal device.

In a fifth aspect, a communication device is provided. The communication device includes a transceiver, a memory, and a processor, wherein the memory is configured to store one or more programs, and the processor is configured to call the one or more programs stored in the memory and control the transceiver to receive or transmit a signal to cause the communication device to perform the method according to any of the first aspect and the second aspect.

In a sixth aspect, an apparatus is provided. The apparatus includes a processor, wherein the processor is configured to call one or more programs from a memory to perform the method according to any of the first aspect and the second aspect.

In a seventh aspect, a chip is provided. The chip includes a processor, wherein the processor is configured to call one or more programs from a memory to cause a device equipped with the chip to perform the method according to any of the first aspect and the second aspect.

In an eighth aspect, a computer-readable storage medium storing one or more programs therein is provided, wherein the one or more programs, when loaded and run by a computer, cause the computer to perform the method according to any of the first aspect and the second aspect.

In a ninth aspect, a computer program product is provided. The computer program product includes one or more programs, wherein the one or more programs, when loaded and run by a computer, causes the computer to perform the method according to any of the first aspect and the second aspect.

In a tenth aspect, a computer program is provided. The computer program, when loaded and run by a computer, causes the computer to perform the method according to any of the first aspect and the second aspect.

By considering the synchronization time difference between the two terminal devices, the RTT positioning errors are reduced.

### BRIEF DESCRIPTION OF THE DRAWINGS

FIG. 1 is a schematic diagram of system architecture of a wireless communication system applicable to embodiments of the present disclosure;
FIG. 2 is schematic diagram of a timing sequence relationship between two parties in downlink communication;
FIG. 3 is schematic diagram of a timing relationship between two parties in sidelink communication;
FIG. 4 is a schematic diagram of an RTT positioning technique in an air interface;
FIG. 5A is a schematic flowchart of a sidelink positioning method according to some embodiments of the present disclosure;
FIG. 5B is a schematic diagram of determining a propagation delay according to some embodiments of the present disclosure;
FIG. 5C is a schematic diagram of determining a propagation delay according to some embodiments of the present disclosure;
FIG. 6 is a schematic diagram of determining a synchronization time difference according to some embodiments of the present disclosure;
FIG. 7 is a schematic diagram of determining a synchronization time difference according to some embodiments of the present disclosure;
FIG. 8 is a schematic structural diagram of a communication device according to some embodiments of the present disclosure;
FIG. 9 is a schematic structural diagram of a communication device according to some embodiments of the present disclosure; and
FIG. 10 is a schematic structural diagram of an apparatus according to some embodiments of the present disclosure.

### DETAILED DESCRIPTION

The technical solutions of the present disclosure are described in detail with reference to the accompanying drawings.

### Architecture of communication system

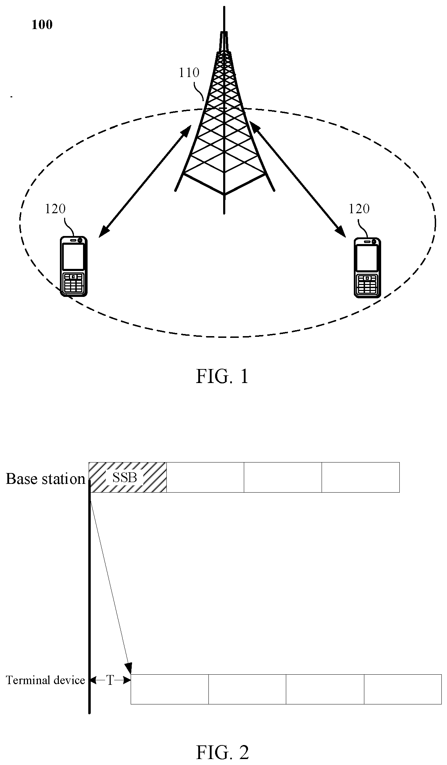

FIG. 1 is a schematic diagram of system architecture of a wireless communication system 100 applicable to embodiments of the present disclosure; The wireless communication system 100 includes a network device 110 and a terminal device 120. The network device 110 may be a device in communication with the terminal device 120. The network device 110 may provide communication coverage for a specific geographical region, and may communicate with any terminal 120 within the coverage area.

FIG. 1 exemplarily illustrates one network device and one terminal device. Optionally, the wireless communication system 100 may include one or more network devices 110 and/or one or more terminal devices 120. With respect to one network device 110, the one or more terminal devices 120 may all be within a network coverage of the network device 110, or may all be outside the network coverage of the network device 110, or may be partially within the network coverage of the network device 110 and partially outside the network coverage of the network device 110, which is not limited in the embodiments of the present disclosure.

Optionally, the wireless communication system 100 may further include another network entity such as a network controller, a mobility management entity, or the like, which is not limited in the embodiments of the present disclosure.

It should be understood that the technical solutions according to the embodiments of the present disclosure may be applied to various communication systems, for example: a 5^{th} generation (5G) or a new radio (NR) system, a long-term evolution (LTE) system, an LTE frequency-division duplex (FDD) system, an LTE time-division duplex (TDD) system, or the like. The technical solutions according to the present disclosure may also be applied to future communication systems, such as a 6^{th} generation (6G) mobile communication system, such as a satellite communication system or the like.

The terminal device according to the embodiments of the present disclosure may also be referred to as a user equipment (UE), an access terminal, a subscriber unit, a subscriber station, a mobile station (MS), a mobile terminal (MT), a remote station, a remote terminal, a mobile device, a user terminal, a wireless communication device, a user agent, or a user apparatus. The terminal device according to the embodiments of the present disclosure may refer to a device providing voice and data connectivity for users, or device capable of connecting to human, things, and machines, for example, a handheld device, a vehicle-mounted device or the like having a wireless connection function. The terminal device according to the embodiments of the present disclosure may be a mobile phone, a pad, a laptop, a palmtop, a mobile Internet device (MID), a wearable device, a virtual reality (VR) device, an augmented reality (AR) device, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, or the like. Optionally, the UE may serve as a base station. For example, the UE may serve as a dispatch entity, which provides sidelink signals between terminal devices in vehicle-to-everything (V2X) or device-to-device (D2D) communications or the like. For example, a cellular phone and a vehicle communicate with each other based on the sidelink signals. The cellular phone and a smart home device communicate with each other, with no need of relaying communication signals over a base station.

The network device according to the embodiments of the present disclosure may be a device for communicating with the terminal device. The network device may also be referred to as an access network device or a wireless access device. For example, the network device may be a base station. The network device according to the embodiments of the present disclosures may refer to a radio access network (RAN) node (or device) that accesses a terminal device to a wireless network. The base station may broadly cover or replace various names such as, a node B (NodeB), an evolved base station (evolved NodeB, eNB), a next generation base station (next generation NodeB, gNB), a relay station, a transmitting and receiving point (TRP), a transmitting point (TP), an access point (AP), a primary station MeNB, and a secondary station SeNB, an multi-standard radio (MSR) node, a home base station, a network controller, an access node, a wireless node, a transmission node, a transceiver node, a baseband unit (BBU), a remote ratio unit ( RRU), an active antenna unit (AAU), a remote radio head (RRH), and a central unit (CU), a distributed unit (DU), a positioning node, and the like. The base station may be a macro base station, a micro base station, a relay node, a donor node, or the like, or a combination thereof. The base station may also refer to a communication module, a modem, or a chip configured in the above apparatus or device. The base station may also be a mobile switching center and a device in D2D, V2X, or machine-to-machine (M2M) communication to assume the function of a base station, a network device in a 6G network, a device in a future communication system to assume the function of a base station, or the like. The base station may support networks of the same or different access technologies. The embodiments of the present disclosure do not limit the specific technology adopted by a network device and the specific device form.

The base station may be stationary or mobile. For example, a helicopter or unmanned aerial vehicle may be configured to serve as a mobile base station, and one or more cells may move depending on the location of the mobile base station. In other examples, the helicopter or unmanned aerial vehicle may be configured to serve as a device to communicate with another base station.

In some deployments, the network device according to the embodiments of the present disclosure may refer to a CU or a DU, or the network device includes a CU and a DU. The gNB may also include an AAU.

The network device and the terminal devices may be deployed on land, including indoor or outdoor, hand-held, or vehicle-mounted; or may be deployed on the water surface; or may be deployed on airplanes, balloons, and satellites. In the embodiments of the present disclosure, the scenario wherein the network device and the terminal devices are located is not limited.

It will be appreciated that all or part of the functionality of the communication devices in the present disclosure may also be implemented by software functions running on hardware, or by virtualization functions instantiated on a platform, such as a cloud platform.

In sidelink communication, a synchronization mechanism helps to maintain consistency in time between terminal devices to implement accurate communication and positioning. A commonly used synchronization approach is synchronization based on timestamps. When a transmitter device transmits a data packet, a timestamp may be contained in the data packet, which indicates a time when the data packet is transmitted. Upon receipt of the data packet, a receiver device may read the timestamp, and record a time when the data packet is received. A signal propagation delay between two devices may be calculated based on the time when the data packet is transmitted from the transmitter device and the time when the data packet is received by the receiver device.

In addition to the timestamp-based synchronization approach, some other synchronization approaches may also be used in sidelink positioning. For example, satellite signals may be used for synchronization between the two devices. The two devices may receive time signals from a satellite and calibrate their own clocks using the time signals . In this way, the two devices may be synchronized with each other, such that communication and positioning are implemented.

The sidelink communication typically supports three potential synchronization sources: a global navigation satellite system (GNSS), a base station, and a synchronization reference terminal device. The synchronization reference terminal device refers to a terminal device capable of being directly synchronized to the GNSS or the base station. Alternatively, the synchronization reference terminal device may also refer to a terminal device capable of being synchronized to other synchronization reference terminal devices. Where no sidelink carrier resource is configured for a terminal device, typically, the terminal device may only take the GNSS or the base station as a synchronization source.

In the sidelink communication, compared to air interface (Uu interface) communication, synchronization patterns are different. During communication based on the air interface, the terminal device may perform downlink synchronization with the base station. Therefore, a difference between a frame header (for example, a frame header of a subframe) of a downlink signal received by the terminal device and a frame header of a downlink signal transmitted by the base station only contains a signal transmission delay (as illustrated in FIG. 2, in which T represents the transmission delay of the signal).

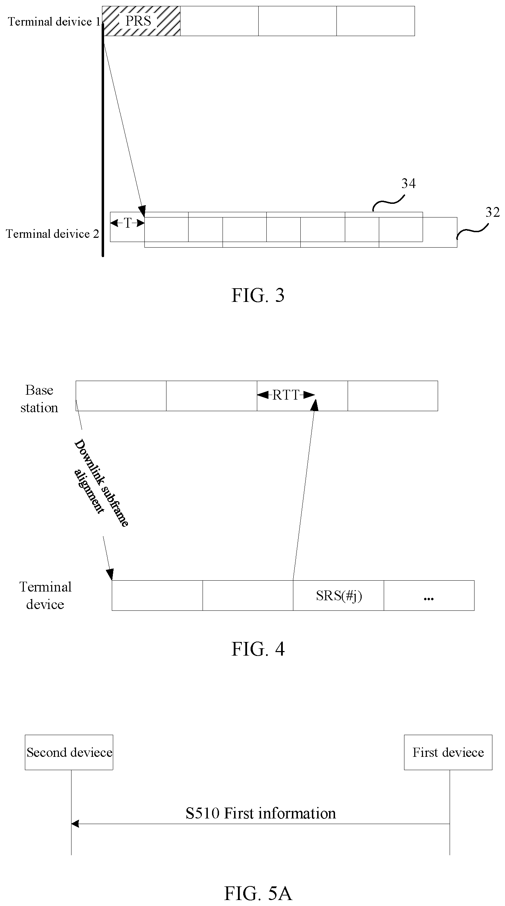

In sidelink communication, in a case where the base station or GNSS is used as the synchronization source, a time difference between frame headers (for example, frame headers of subframes) between the terminal devices serving as the transmitter and the receiver includes not only a transmission delay of signals over the sidelink but also a time difference caused by other factors. FIG. 3 gives an example of a synchronization scenario of two communication parties in sidelink communication. As illustrated in FIG. 3, a terminal device 1 is a transmitter device, a terminal device 2 is a receiver device. Reference numeral 32 represents a timing sequence of receiving a signal by the terminal device 2 from the terminal device 1. Reference numeral 34 represents a timing sequence of the terminal device 1 itself. It can be seen from FIG. 3 that frame headers of subframes of the terminal device 2 and the terminal device 1 are not aligned. That is, a synchronization time difference is present between the terminal device 2 and the terminal device 1.

In sidelink communication, the reason why the synchronization time difference is present between transmitter and receiver parties is that the transmitter and receiver parties may be synchronized via a third party (such as the base station or GNSS), but clocks between the transmitter and receiver parties are not fully aligned.

A difference in synchronization between the transmitter and receiver parties in sidelink communication does not exert much effect on the normal sidelink communication process (e.g., transmission of sidelink data). This is because as long as symbol offsets of the two communication parties do not exceed a cyclic prefix (CP) length, normal communication may still be maintained. However, with respect to positioning, a synchronization error of 1 µs may result in a positioning error of approximately 300 meters. The transmission delay under the CP length corresponds to a distance of about 1500 meters. Therefore, where the position error needs to be controlled within 10 meters, an allowable time estimation error is about 1/150 of a CP. It can be seen that compared to the sidelink communication, sidelink positioning imposes a stricter requirement on the synchronization between the transmitter and receiver parties.

In sidelink positioning, the RTT positioning method is effective. The RTT refers to the time experienced from transmitting a data packet to receiving an acknowledgment packet in response to the transmitted data packet. In sidelink positioning, the terminal device may calculate a distance between the terminal and other terminal devices by measuring the RTT. For example, the terminal device 1 may transmit a data packet to the terminal device 2 on the opposite side, and the terminal device 2 may transmit an acknowledgement data packet to the terminal device 1 immediately upon receipt of the data packet. The terminal device 1 calculates the RTT by measuring a time difference between a time when the data packet is transmitted and a time when the acknowledgment data packet is received. Through a plurality of RTT measurements, the terminal device may acquire a set of RTT values, and then estimate a distance between the terminal devices or perform positioning of the terminal devices by using this set of values.

With respect the RTT positioning method, the terminal devices require more precise time synchronization to ensure the accuracy of collaboration and communication therebetween. In some protocols (e.g., TS 38.215 R17), the RTT positioning method based on the air interface is implemented by calculating a transmission and reception time difference of the terminal device. The transmission and reception time difference of the terminal device refers to a time difference (or timing sequence difference) between a time when the terminal device receives a downlink subframe and a time when the terminal device transmits an uplink subframe.

The transmission and reception time difference of the terminal device is calculated as follows: the transmission and reception time difference of the terminal device = T_{UE-RX}-T_{UE-TX}. T_{UE-RX} refers to a time when the terminal device receives a downlink subframe #i from the base station (or transmission/reception point (TP)), and the time may be defined based on a time of a first transmission path detected by the terminal device. T_{UE-TX} refers to the time when the terminal device transmits an uplink subframe #j. The uplink subframe #j is closest in time to the downlink subframe #i.

Simply, the transmission and reception time difference of the terminal device is a time interval between reception of a downlink subframe by the terminal device from the base station and transmission of an uplink subframe with a time similar to the received downlink subframe. This approach is valid because the downlink subframes transmitted by the base station are aligned with the subframes of the terminal device in time, and the transmission and reception time difference of the terminal device is an integer multiple of the number of subframes. Since the transmission delay of the signal used for positioning generally does not exceed one subframe, the transmission and reception time difference of the terminal device calculated by using above method is consistent with the actual situation, as illustrated in FIG. 4.

In order to be compatible with the RTT positioning method using the air interface, the definition of transmission and reception time difference in the air interface may be referred to that in the sidelink communication. For example, the terminal device 1 transmits a signal to the terminal device 2. Upon receipt of the signal, the terminal device 2 transmits the signal back to the terminal device 1. During this process, the transmission time of the terminal device 2 may be defined as a time corresponding to the transmission subframe #j of the terminal device 2, which is the time closest to the time when the downlink subframe #i is received from the terminal device 1 on the opposite side. However, where this definition method is used, a positioning error is introduced. The reason why the positioning error is introduced is that the transmitter and receiver parties may be synchronized via a third party, and the transmission subframe of the terminal device 1 is not aligned with the transmission subframe of the terminal device 2. As a result, the transmission and reception time difference of the terminal device 2 may not be an integer multiple of the number of subframes. Therefore, in a case where the RTT positioning method based on the air interface is directly applied to sidelink positioning, the calculation of transmission and reception time difference of the terminal device may cause errors, which leads to inaccuracies in a final positioning result.

To address above issue, the present disclosure provides a sidelink positioning method to reduce positioning errors caused by synchronization errors. Detailed description is given hereinafter to embodiments of the present disclosure.

FIG. 5A is a schematic flowchart of a sidelink positioning method according to some embodiments of the present disclosure. The method as illustrated in FIG. 5A is described from the perspective of interaction between a first device and a second device. The first device and the second device may be devices of any type that are involved in sidelink positioning.

In some embodiments, the first device and the second device may be two terminal devices that perform RTT positioning (or referred to as RTT positioning). Hereinafter, these two terminal devices are respectively referred to as a first terminal device and a second terminal device. The first terminal device and the second terminal device may be terminal devices that perform synchronization with a third-party synchronization source (for example, a base station or a GNSS).

In some embodiments, the first device may be a terminal device, and the second device may be a base station.

In some embodiments, the first device may be a terminal device, and the second device may be a positioning server.

In some embodiments, the first device may be a base station, and the second device may be a positioning server.

In some embodiments, the first device may be a reference terminal device, for example, a synchronization reference terminal device or a positioning reference terminal device. The second device may be the first terminal device, the second terminal device, the base station, or the positioning server.

Referring to FIG. 5A, in step S510, the first device transmits first information to the second device.

In some embodiments, the first information is used for determining an RTT between the first terminal device and the second terminal device.

In some embodiments, the first information corresponds to a first time period, the first time period including a first time difference, the first time difference being determined based on one or more of: a subframe boundary of the first terminal device; a subframe boundary of the second terminal device; a reception time of a first signal; a transmission time of a second signal; or a synchronization time difference between the first terminal device and the second terminal device; wherein the first signal is a reference signal for sidelink positioning transmitted by the first terminal device to the second terminal device, and the second signal is a reference signal for sidelink positioning transmitted by the second terminal device to the first terminal device.

In some embodiments, the first time difference is determined based on a subframe boundary of the first terminal device and a subframe boundary of the second terminal device.

In some embodiments, the first time difference includes a minimum absolute time difference between the subframe boundary of the first terminal device and the subframe boundary of the second terminal device.

In some embodiments, the first information may include a time difference between frame headers of subframes of the first terminal device and the second terminal device. Still referring to FIG. 3, the first terminal device is the terminal device 1 in FIG.3, and the second terminal device is the terminal device 2 in FIG.3. A timing sequence 32 of the terminal device 2 receiving the signal from the terminal device 1 is not aligned with a timing sequence 34 of the terminal device 1. In this case, the time difference T between the frame headers of the subframes of the terminal device 1 and the terminal device 2 may be reported to the positioning server (or positioning calculation unit) for determining the RTT between the terminal device 1 and the terminal device 2.

In some embodiments, the first information may include a time difference between transmission and reception of a subframe timing sequence of the first terminal device or the second terminal device.

In some embodiments, the first information may include an error (time difference) between frame headers of a reception subframe and a transmission subframe of the first terminal device.

In some embodiments, the first time difference is determined based on the reception time of the first signal and a subframe boundary of a first subframe of the second terminal device, wherein the subframe boundary of the first subframe is a subframe boundary closest to the reception time of the first signal.

In some embodiments, the reception time of the first signal is t1, the subframe boundary of the first subframe closest to the reception time of the first signal is t2, a reception time of the second signal is t3, a subframe boundary of a second subframe closest to a reception time of the second signal is t4, and a propagation delay satisfies one or more of the following cases:

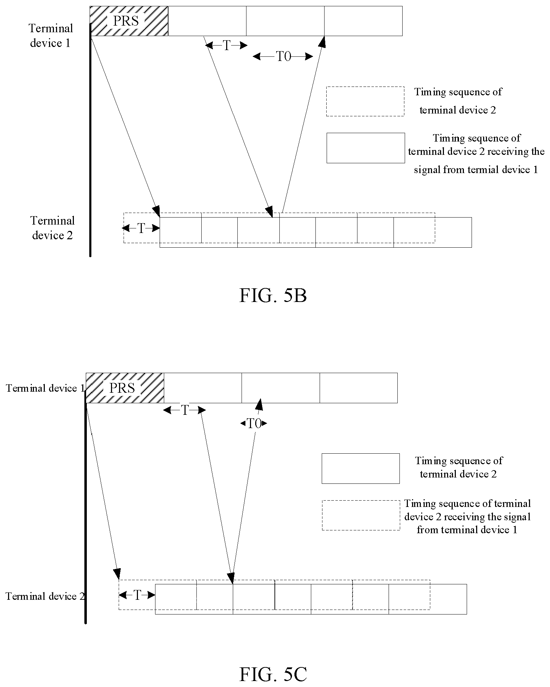

In a case where t1>t2, the propagation delay is illustrated in FIG. 5B, T is t1-t2 according to plane geometry and T0 is t3-t4 according the reported content, then the propagation delay is [(t3-t4)+(t1-t2)]/2.

In a case where t1<t2, the propagation delay is illustrated in FIG. 5C, T is t1-t2 and T0 is t3-t4 according to the reported content, the propagation delay is (t3-t4)/2+[T_subframe-( t1-t2)]/2, where T_subframe is the length of a subframe, considering that the propagation delay will be lower than the length of the subframe, the above equation may be mod{[(t3-t4)-(t1-t2)], T_subframe}/2; and mod represents a remainder operation.

In some embodiments, the first time difference is a time difference between the reception time of the first signal and the transmission time of the second signal.

In some embodiments, the first time difference is a synchronization time difference between the first terminal device and the second terminal device.

In the RTT positioning process, the synchronization time difference between the first terminal device and the second terminal device may be compatible with the RTT positioning technique over the air interface, and a higher positioning accuracy in sidelink scenarios may be acquired.

In some embodiments, a receiver device of the first information may include one or more of: the first terminal device; the second terminal device; a positioning server; a reference terminal device (for example, a positioning reference terminal device); or a base station of a serving cell.

In some embodiments, the base station of the serving cell includes one or more of: a base station of a serving cell of the first terminal device; a base station of a serving cell of the second terminal device; a base station of a serving cell of a first target terminal device, wherein the first target terminal device is a terminal device in the first terminal device and the second terminal device that first transmits a positioning reference signal (PRS) during RTT positioning; a base station of a serving cell of a second target terminal device, wherein the second target terminal device is a terminal device in the first terminal device and the second terminal device that returns a PRS during RTT positioning; a base station of a serving cell of a third target terminal device, wherein the third target terminal device is a terminal device in the first terminal device and the second terminal device that initiates a positioning request; or a base station of a serving cell of the reference terminal device.

In some embodiments, the first information is reported by the first terminal device to the positioning server.

In some embodiments, the first information is reported by the second terminal device to the positioning server.

In some embodiments, the first information belongs to target information for determining the RTT. The target information further includes one or more of: second information for indicating a reception and transmission time difference of the first terminal device; third information for indicating a reception and transmission time difference of the second terminal device; or fourth information for indicating a signal propagation delay between the first terminal device and the second terminal device.

In some embodiments, the fourth information may be equal to T1-T2. T1 represents the time difference indicated by the second information, and T2 represents the time difference indicated by the third information.

In some embodiments, the second information is reported by the first terminal device to a positioning server, and the third information is reported by the second terminal device to the positioning server. That is, the first terminal device and the second terminal device respectively report their respective information.

In some embodiments, the second information and the third information are both reported by the first terminal device to the positioning server. That is, the first terminal device summarizes and reports the information of the first terminal device and the second terminal device. The first terminal device may separately report the information of the first terminal device and the information of the second terminal device, or may concurrently report the information of the first terminal device and the information of the second terminal device.

In some embodiments, the second information and the third information are both reported by the second terminal device to the positioning server. That is, the second terminal device summarizes and reports the information of the first terminal device and the second terminal device. The second terminal device may separately report the information of the first terminal device and the information of the second terminal device, or may concurrently report the information of the first terminal device and the information of the second terminal device.

In some embodiments, the fourth information is determined by the first terminal device based on the second information and the third information, and is reported by the first terminal device to the positioning server.

In some embodiments, the fourth information is determined by the second terminal device based on the second information and the third information, and is reported by the second terminal device to the positioning server.

In some embodiments, the synchronization time difference is determined by a synchronization source. The synchronization source herein may be a base station. That is, in a case where the first terminal and the second terminal device are within the coverage of the same base station, the base station may determine the synchronization time difference between the first terminal device and the second terminal device, and report the synchronization time difference to the positioning server. In a case where the synchronization source is a base station, uplink timing and sidelink timing of the first terminal device and the second terminal device may be the same.

In some embodiments, the synchronization time difference is determined by a synchronization source based on a first synchronization result and a second synchronization result. The first synchronization result is a synchronization result between the synchronization source and the first terminal device, and the second synchronization result is a synchronization result between the synchronization source and the second terminal device. For example, the synchronization time difference is determined based on a difference between a difference between the first synchronization result and the second synchronization result. Exemplarily, the synchronization time difference is equal to the difference between the first synchronization result and the second synchronization result.

Using a case where the synchronization source is a base station as an example, the first synchronization result and the second synchronization result may respectively refer to an uplink synchronization result between the base station and the first terminal device and an uplink synchronization result between the base station and the second terminal device.

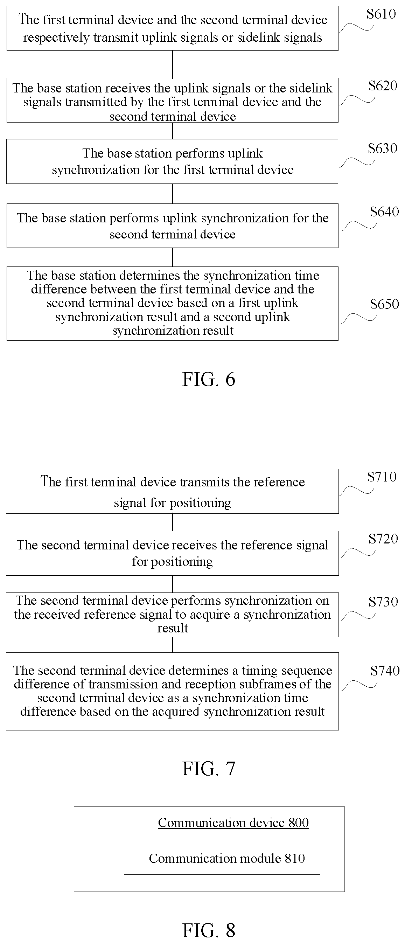

Hereinafter a specific example is given with reference to FIG. 6.

Referring to FIG. 6, in step S610, the first terminal device and the second terminal device respectively transmit uplink signals or sidelink signals.

In step S620, the base station receives the uplink signals or the sidelink signals transmitted by the first terminal device and the second terminal device.

In step S630, the base station performs uplink synchronization for the first terminal device.

In step S640, the base station performs uplink synchronization for the second terminal device.

In step S650, the base station determines the synchronization time difference between the first terminal device and the second terminal device based on a first uplink synchronization result and a second uplink synchronization result.

It should be noted that the uplink synchronization described in FIG. 6 may differ from the uplink synchronization typically performed by the base station. This is because conventional uplink synchronization is to acquire an accurate timing advance (TA), such that the uplink signals of different terminal devices are aligned to reduce interference between terminal devices. The purpose of performing uplink synchronization in FIG. 6 is to perform positioning. As mentioned above, the accuracy requirement for positioning is much stricter than that for conventional uplink synchronization. For example, in a case where a subcarrier spacing of the terminal device is 15 kHz, a quantization interval of the TA corresponds to a transmission distance of approximately 80 meters, which does not meet the accuracy requirement for positioning. In scenarios where high positioning accuracy is not required, the synchronization time difference between two terminal devices may also be calculated based on TA.

In some embodiments, the synchronization time difference may also be determined by the second terminal device. This method is suitable for the scenario where the first terminal device transmits a reference signal for positioning. For example, referring to FIG. 7, in step S710, the first terminal device transmits the reference signal for positioning. In step S720, the second terminal device receives the reference signal for positioning. In step S730, the second terminal device performs synchronization on the received reference signal to acquire a synchronization result. In step S740, the second terminal device determines a timing sequence difference of transmission and reception subframes of the second terminal device as a synchronization time difference based on the acquired synchronization result.

In some embodiments, the synchronization time difference is reported by one or more of: the first terminal device; the second terminal device; a positioning server; a positioning reference device (or reference node); or a base station.

In some embodiments, a report frequency of the synchronization time difference is associated with a movement speed of the first terminal device. For example, in a case where the first terminal device moves slowly, remains stationary, or maintains a fixed relative position, the report frequency of the synchronization time difference may be lower than that of the transmission and reception time difference of the terminal device. That is, the synchronization time difference does not necessarily need to be reported each time the measurement results are reported. For example, the synchronization time difference may be reported based on a request from the positioning server.

The above sections, with reference to FIG. 1 to FIG. 7, describe in detail the method embodiments of the present disclosure. The following sections, with reference to FIG. 8 to FIG. 10, describe in detail the apparatus embodiments of the present disclosure. It should be understood that the description of the method embodiments corresponds to the description of the apparatus embodiments, such that the parts that are not described in detail may be referred to the preceding method embodiments.

FIG. 8 is a schematic structural diagram of a communication device according to some embodiments of the present disclosure. The communication device 800 as illustrated in FIG. 8 may be the first device as described above. The communication device 800 may include a communication module 810. The communication module 810 is configured to transmit first information, wherein the first information is used for determining a propagation time between a first terminal device and a second terminal device, and the first information corresponds to a first time period, the first time period including a first time difference, the first time difference being determined based on one or more of: a subframe boundary of the first terminal device; a subframe boundary of the second terminal device; a reception time of a first signal; a transmission time of a second signal; or a synchronization time difference between the first terminal device and the second terminal device; wherein the first signal is a reference signal for sidelink positioning transmitted by the first terminal device to the second terminal device, and the second signal is a reference signal for sidelink positioning transmitted by the second terminal device to the first terminal device.

In some embodiments, the first time difference includes a minimum absolute time difference between the subframe boundary of the first terminal device and the subframe boundary of the second terminal device.

In some embodiments, the first time difference is determined based on the reception time of the first signal and a subframe boundary of a first subframe of the second terminal device, wherein the subframe boundary of the first subframe is a subframe boundary closest to the reception time of the first signal.

In some embodiments, the reception time of the first signal is t1, the subframe boundary of the first subframe closest to the reception time of the first signal is t2, a reception time of the second signal is t3, a subframe boundary of a second subframe closest to a reception time of the second signal is t4, and a propagation delay satisfies one or more of the following cases: in a case where t1<t2, the propagation delay is [(t3-t4)+T_subframe-(t1-t2)]/2 or mod{[(t3-t4)-(t1-t2)], T_subframe}/2, wherein T_subframe represents a subframe time length, and mod represents a remainder operation; or in a case where t1>t2, the propagation delay is [(t3-t4)+(t1-t2)]/2.

In some embodiments, the first time difference is a time difference between the reception time of the first signal and the transmission time of the second signal.

In some embodiments, a receiver device of the first information may include one or more of: the first terminal device; the second terminal device; a positioning server; a reference terminal device; or a base station of a serving cell.

In some embodiments, the base station of the serving cell includes one or more of: a base station of a serving cell of the first terminal device; a base station of a serving cell of the second terminal device; a base station of a serving cell of a first target terminal device, wherein the first target terminal device is a terminal device in the first terminal device and the second terminal device that first transmits a PRS during RTT positioning; a base station of a serving cell of a second target terminal device, wherein the second target terminal device is a terminal device in the first terminal device and the second terminal device that returns a PRS during RTT positioning; a base station of a serving cell of a third target terminal device, wherein the third target terminal device is a terminal device in the first terminal device and the second terminal device that initiates a positioning request; or a base station of a serving cell of the reference terminal device.

In some embodiments, the first information is reported by the first terminal device to the positioning server, or the first information is reported by the second terminal device to the positioning server.

In some embodiments, the first information belongs to target information for determining the RTT, wherein the target information further includes one or more of: second information for indicating a reception and transmission time difference of the first terminal device; third information for indicating a reception and transmission time difference of the second terminal device; or fourth information for indicating a signal propagation delay between the first terminal device and the second terminal device.

In some embodiments, the second information is reported by the first terminal device to a positioning server, and the third information is reported by the second terminal device to the positioning server; or the second information and the third information are both reported by the first terminal device to a positioning server; or the second information and the third information are both reported by the second terminal device to a positioning server; or the fourth information is determined by the first terminal device based on the second information and the third information, and is reported by the first terminal device to a positioning server; or the fourth information is determined by the second terminal device based on the second information and the third information, and is reported by the second terminal device to a positioning server.

In some embodiments, the first time difference is determined by a synchronization source.

In some embodiments, the first time difference is determined by the synchronization source based on a first synchronization result and a second synchronization result, wherein the first synchronization result is a synchronization result between the synchronization source and the first terminal device, and the second synchronization result is a synchronization result between the synchronization source and the second terminal device.

In some embodiments, the first time difference is determined based on a difference between the first synchronization result and the second synchronization result.

In some embodiments, the first time difference is reported by one or more of: the first terminal device; the second terminal device; a positioning server; a positioning reference device; or a base station.

In some embodiments, a report frequency of the first time difference is associated with a movement speed of the first terminal device.

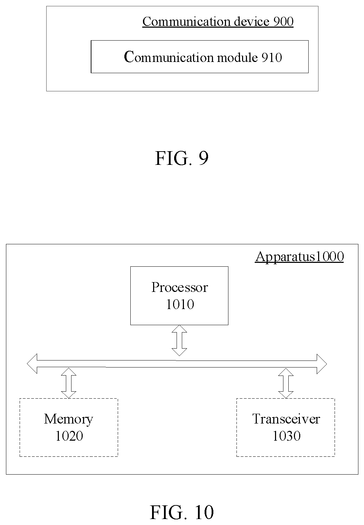

FIG. 9 is a schematic structural diagram of a communication device 900 according to some embodiments of the present disclosure. The communication device 900 as illustrated in FIG. 9 may be the second device as described above. The communication device 900 may include a communication module 910. The communication module 910 is configured to receive first information, wherein the first information is used for determining a propagation time between a first terminal device and a second terminal device, and the first information corresponds to a first time period, the first time period including a first time difference, the first time difference being determined based on one or more of: a subframe boundary of the first terminal device; a subframe boundary of the second terminal device; a reception time of a first signal; a transmission time of a second signal; or a synchronization time difference between the first terminal device and the second terminal device; wherein the first signal is a reference signal for sidelink positioning transmitted by the first terminal device to the second terminal device, and the second signal is a reference signal for sidelink positioning transmitted by the second terminal device to the first terminal device.

In some embodiments, the first time difference includes a minimum absolute time difference between the subframe boundary of the first terminal device and the subframe boundary of the second terminal device.

In some embodiments, the first time difference is determined based on the reception time of the first signal and a subframe boundary of a first subframe of the second terminal device, wherein the subframe boundary of the first subframe is a subframe boundary closest to the reception time of the first signal.

In some embodiments, the reception time of the first signal is t1, the subframe boundary of the first subframe closest to the reception time of the first signal is t2, a reception time of the second signal is t3, a subframe boundary of a second subframe closest to a reception time of the second signal is t4, and a propagation delay satisfies one or more of the following cases: in a case where t1<t2, the propagation delay is [(t3-t4)+T_subframe-(t1-t2)]/2 or mod{[(t3-t4)-(t1-t2)], T_subframe}/2, wherein T_subframe represents a subframe time length, and mod represents a remainder operation; or in a case where t1>t2, the propagation delay is [(t3-t4)+(t1-t2)]/2.

In some embodiments, the first time difference is a time difference between the reception time of the first signal and the transmission time of the second signal.

In some embodiments, a receiver device of the first information may include one or more of: the first terminal device; the second terminal device; a positioning server; a reference terminal device; or a base station of a serving cell.

In some embodiments, the base station of the serving cell includes one or more of: a base station of a serving cell of the first terminal device; a base station of a serving cell of the second terminal device; a base station of a serving cell of a first target terminal device, wherein the first target terminal device is a terminal device in the first terminal device and the second terminal device that first transmits a PRS during RTT positioning; a base station of a serving cell of a second target terminal device, wherein the second target terminal device is a terminal device in the first terminal device and the second terminal device that returns a PRS during RTT positioning; a base station of a serving cell of a third target terminal device, wherein the third target terminal device is a terminal device in the first terminal device and the second terminal device that initiates a positioning request; or a base station of a serving cell of the reference terminal device.

In some embodiments, the first information is reported by the first terminal device to the positioning server, or the first information is reported by the second terminal device to the positioning server.

In some embodiments, the first information belongs to target information for determining the RTT, wherein the target information further includes one or more of: second information for indicating a reception and transmission time difference of the first terminal device; third information for indicating a reception and transmission time difference of the second terminal device; or fourth information for indicating a signal propagation delay between the first terminal device and the second terminal device.

In some embodiments, the second information is reported by the first terminal device to a positioning server, and the third information is reported by the second terminal device to the positioning server; or the second information and the third information are both reported by the first terminal device to a positioning server; or the second information and the third information are both reported by the second terminal device to a positioning server; or the fourth information is determined by the first terminal device based on the second information and the third information, and is reported by the first terminal device to a positioning server; or the fourth information is determined by the second terminal device based on the second information and the third information, and is reported by the second terminal device to a positioning server.

In some embodiments, the first time difference is determined by a synchronization source.

In some embodiments, the first time difference is determined by the synchronization source based on a first synchronization result and a second synchronization result, wherein the first synchronization result is a synchronization result between the synchronization source and the first terminal device, and the second synchronization result is a synchronization result between the synchronization source and the second terminal device.

In some embodiments, the first time difference is determined based on a difference between the first synchronization result and the second synchronization result.

In some embodiments, the first time difference is reported by one or more of: the first terminal device; the second terminal device; a positioning server; a positioning reference device; or a base station.

In some embodiments, a report frequency of the first time difference is associated with a movement speed of the first terminal device.

FIG. 10 is a schematic diagram of an apparatus 1000 according to some embodiments of the present disclosure. The dotted lines in FIG. 10 indicate that the unit or module is optional. The apparatus 1000 may be employed to perform the method according to the above method embodiments. The apparatus 1000 may be a chip, a terminal device, or a network device.

The apparatus 1000 may include one or more processors 1010. The processor 1010 may support implementation of the method according to the above method embodiments by the apparatus 1000. The processor 1010 may be a general purpose processor or an application-specific processor. For example, the processor may be a central processing unit (CPU). The processor may be a general processor, a digital signal processor (DSP), an application specific integrated circuit (ASIC), a field programmable gate array (FPGA) or another programmable logic device, a discrete gate or transistor logic device, or a discrete hardware component, or the like. The general-purpose processor may be a microprocessor or any customary processor or the like.

The apparatus 1000 may further include one or more memories 1020. The memory 1020 has stored thereon a program that is executable by the processor 1010 to cause the processor 1010 to perform the method described in the above method embodiments. The memory 1020 may be separate from the processor 1010 or integrated within the processor 1010.

The apparatus 1000 may also include a transceiver 1030. The processor 1010 may communicate with other devices or chips by the transceiver 1030. For example, the processor 1010 may communicate (transmit and receive) data with other devices or chips by the transceiver 1030.

Some embodiments of the present disclosure further provide a computer-readable storage medium configured to store one or more programs. The computer-readable storage medium may be applied to a communication device according to the embodiments of the present disclosure, and the computer program causes a computer to perform the method performed by the communication device according to the respective embodiments of the present disclosure.

Some embodiments of the present disclosure further provide a computer program product. The computer program product includes one or more programs. The computer program may be applied to a communication device according to the embodiments of the present disclosure, and the computer program causes a computer to perform the method performed by the communication device according to the respective embodiments of the present disclosure.

Some embodiments of the present disclosure further provide a computer program. The computer program may be applied to a communication device according to the embodiments of the present disclosure, and the computer program causes a computer to perform the method performed by the communication device according to the respective embodiments of the present disclosure.

It should be understood that the terms "system" and "network" in the specification are generally exchanged. Further, the terms used herein are for the purpose of describing particular embodiments only and are not intended to limit the present disclosure. The terms such as "first," "second," "third," "fourth," and the like in the specifications, claims and the accompanying drawings of the present disclosure are intended to distinguishing different objects but are not intended to define a specific sequence. In addition, terms "comprise," "include," and variations thereof are intended to define a non-exclusive meaning.

In the embodiments of the present disclosure, the term "indication" mentioned in the specification may indicate a direct indication, an indirect indication, or an association. By way of example, the expression "A indicates B" may mean that A directly indicates B, e.g., B may be obtained by A; or mean that A indicates B indirectly, for example A indicates C, and B may be obtained by C; or mean that an association is present between A and B.

In the embodiments of the present disclosure, the expression "B corresponding to A" means that B is associated with A, from which B may be determined. However, it should also be understood that determining B from A does not mean determining B from A alone, and B may also be determined from A and/or other information.

In the embodiments of the present disclosure, the term "correspond" or derivatives thereof may mean that there is a direct correspondence or an indirect correspondence between the two, that there is a correlation between the two, and that there is a relationship between indicating and being indicated, configuring and being configured, or the like.

In embodiments of the present disclosure, "pre-defined" or "pre-configured" may be implemented by pre-storing a corresponding code, table, or other means that may be used to indicate relevant information in a device (e.g., including a terminal device and a network device), and the present disclosure does not limit the specific implementation thereof. For example, the term "predefined" may refer to "defined in the protocol."

In embodiments of the present disclosure, the term "protocol" may refer to a standard protocol in the field of communications, and may include, for example, the LTE protocol, the NR protocol, and related protocols used in future communication systems, without limitation.

In the description of the embodiments of the present disclosure, the term "and/or" is merely an association relationship for describing associated objects, which represents that there may exist three types of relationships, for example, A and/or B may represent three situations: only A exists, both A and B exist, and only B exists. In addition, the forward-slash symbol "/" generally represents an "or" relationship between associated objects before and after the symbol.

It should be understood that in various embodiments of the present disclosure, the sequence numbers of the above various processes or steps do not denote a preferred sequence of performing the processes or steps; and the sequence of performing the processes and steps should be determined according to the functions and internal logics thereof, which shall not cause any limitation to the implementation process of the embodiments of the present disclosure.

In the several embodiments provided in the present disclosure, it should be understood that the disclosed system, apparatus and method may be practiced in other manners. The above described device embodiments are merely illustrative. For example, the unit division is merely logical function division and may be other divisions in actual practice. For example, multiple units or components may be combined or integrated into another device, or some features can be ignored or not performed. Additionally, the displayed or discussed mutual couplings or direct couplings or communication connections may be implemented through some interfaces. The indirect couplings or communication connections between the devices or units may be implemented in electronic, mechanical or other forms.

The units which are described as separate components may be physically separated or may be not physically separated, and the components which are illustrated as units may be or may not be physical units, that is, the components may be located in the same position or may be distributed into a plurality of network units. Some of or all of the units may be selected according to actual needs to achieve the objectives of the solutions of the embodiments.

In addition, functional units in the embodiments of the present disclosure may be integrated into one processing unit, or each of the units may exist along physically, or two or more units may be integrated into one unit.

In the above embodiments, the technical solutions may be totally or partially practiced by software, hardware, firmware or any combination thereof. During practice by software, the technical solutions may be totally or partially implemented in the form of a computer program product. The computer program product includes one or a plurality of computer-executable instructions. The computer program instructions, when loaded and executed on a computer, may cause the computer to totally or partially perform the procedures or functions in the embodiments of the present disclosure. The computer may be a general computer, a dedicated computer, a computer network, or another programming device. The computer-executable instructions may be stored in a computer-readable storage medium, or transferred from one computer-readable storage medium to another. For example, the computer-executable instructions may be transmitted from one website, computer, server or data center to another in a wired fashion, for example, a coaxial cable, an optical fiber, a digital subscriber line (DSL) or a wireless fashion, for example, an infrared ray, a radio, a microwave or the like. The computer-readable storage medium may be any available medium that is accessible or a data storage device such as a server, a data center or the like integrated with one or a plurality of available media. The available medium may be a magnetic medium, for example, a floppy disk, a hard disk or a magnetic tape, an optical medium, for example, a digital versatile disc (DVD), or a semiconductor medium, for example, a solid state disk (SSD) or the like.

The above embodiments are used only for illustrating the present disclosure, but are not intended to limit the protection scope of the present disclosure. Various modifications and replacements readily derived by those skilled in the art within technical disclosure of the present disclosure shall fall within the protection scope of the present disclosure. Therefore, the protection scope of the present disclosure is subject to the appended claims.

## Claims

1. A sidelink positioning method, applicable to a first device, the method comprising:
transmitting first information, wherein the first information is used for determining a propagation time between a first terminal device and a second terminal device, and the first information corresponds to a first time period, the first time period comprising a first time difference, the first time difference being determined based on one or more of:
a subframe boundary of the first terminal device;
a subframe boundary of the second terminal device;
a reception time of a first signal;
a transmission time of a second signal; or
a synchronization time difference between the first terminal device and the second terminal device;
wherein the first signal is a reference signal for sidelink positioning transmitted by the first terminal device to the second terminal device, and the second signal is a reference signal for sidelink positioning transmitted by the second terminal device to the first terminal device.

2. The method according to claim 1, wherein the first time difference comprises a minimum absolute time difference between the subframe boundary of the first terminal device and the subframe boundary of the second terminal device.

3. The method according to claim 1, wherein the first time difference is determined based on the reception time of the first signal and a subframe boundary of a first subframe of the second terminal device, wherein the subframe boundary of the first subframe is a subframe boundary closest to the reception time of the first signal.

4. The method according to claim 3, wherein the reception time of the first signal is t1, the subframe boundary of the first subframe closest to the reception time of the first signal is t2, a reception time of the second signal is t3, a subframe boundary of a second subframe closest to a reception time of the second signal is t4, and a propagation delay satisfies one or more of the following cases:
in a case where t1<t2, the propagation delay is [(t3-t4)+T_subframe-(t1-t2)]/2 or mod{[(t3-t4)-(t1-t2)], T_subframe}/2, wherein T_subframe represents a subframe time length, and mod represents a remainder operation; or
in a case where t1>t2, the propagation delay is [(t3-t4)+(t1-t2)]/2.

5. The method according to claim 1, wherein the first time difference is a time difference between the reception time of the first signal and the transmission time of the second signal.

6. The method according to any one of claims 1 to 5, wherein a receiver device of the first information comprises one or more of:
the first terminal device;
the second terminal device;
a positioning server;
a reference terminal device; or
a base station of a serving cell.

7. The method according to claim 6, wherein the base station of the serving cell comprises one or more of:
a base station of a serving cell of the first terminal device;
a base station of a serving cell of the second terminal device;
a base station of a serving cell of a first target terminal device, wherein the first target terminal device is a terminal device in the first terminal device and the second terminal device that first transmits a positioning reference signal during round-trip time (RTT) positioning;
a base station of a serving cell of a second target terminal device, wherein the second target terminal device is a terminal device in the first terminal device and the second terminal device that returns a positioning reference signal during RTT positioning;
a base station of a serving cell of a third target terminal device, wherein the third target terminal device is a terminal device in the first terminal device and the second terminal device that initiates a positioning request; or
a base station of a serving cell of the reference terminal device.

8. The method according to any one of claims 1 to 7, wherein
the first information is reported by the first terminal device to a positioning server; or
the first information is reported by the second terminal device to a positioning server.

9. The method according to any one of claims 1 to 8, wherein the first information belongs to target information for determining the RTT, wherein the target information further comprises one or more of:
second information for indicating a reception and transmission time difference of the first terminal device;
third information for indicating a reception and transmission time difference of the second terminal device; or
fourth information for indicating a signal propagation delay between the first terminal device and the second terminal device.

10. The method according to claim 9, wherein
the second information is reported by the first terminal device to a positioning server, and the third information is reported by the second terminal device to a positioning server; or
the second information and the third information are both reported by the first terminal device to a positioning server; or
the second information and the third information are both reported by the second terminal device to a positioning server; or
the fourth information is determined by the first terminal device based on the second information and the third information, and is reported by the first terminal device to a positioning server; or
the fourth information is determined by the second terminal device based on the second information and the third information, and is reported by the second terminal device to a positioning server.

11. The method according to any one of claims 1 to 10, wherein the first time difference is determined by a synchronization source.

12. The method according to claim 11, wherein the first time difference is determined by the synchronization source based on a first synchronization result and a second synchronization result, wherein the first synchronization result is a synchronization result between the synchronization source and the first terminal device, and the second synchronization result is a synchronization result between the synchronization source and the second terminal device.

13. The method according to claim 12, wherein the first time difference is determined based on a difference between the first synchronization result and the second synchronization result.

14. The method according to any one of claims 1 to 13, wherein the first time difference is reported by one or more of:
the first terminal device;
the second terminal device;
a positioning server;
a positioning reference device; or
a base station.

15. The method according to any one of claims 1 to 14, wherein a report frequency of the first time difference is associated with a movement speed of the first terminal device.

16. A sidelink positioning method, applicable to a second device, the method comprising:
receiving first information, wherein the first information is used for determining a propagation time between a first terminal device and a second terminal device, and the first information corresponds to a first time period, the first time period comprising a first time difference, the first time difference being determined based on one or more of:
a subframe boundary of the first terminal device;
a subframe boundary of the second terminal device;
a reception time of a first signal;
a transmission time of a second signal; or
a synchronization time difference between the first terminal device and the second terminal device;
wherein the first signal is a reference signal for sidelink positioning transmitted by the first terminal device to the second terminal device, and the second signal is a reference signal for sidelink positioning transmitted by the second terminal device to the first terminal device.

17. The method according to claim 16, wherein the first time difference comprises a minimum absolute time difference between the subframe boundary of the first terminal device and the subframe boundary of the second terminal device.

18. The method according to claim 16, wherein the first time difference is determined based on the reception time of the first signal and a subframe boundary of a first subframe of the second terminal device, wherein the subframe boundary of the first subframe is a subframe boundary closest to the reception time of the first signal.

19. The method according to claim 18, wherein the reception time of the first signal is t1, the subframe boundary of the first subframe closest to the reception time of the first signal is t2, a reception time of the second signal is t3, a subframe boundary of a second subframe closest to a reception time of the second signal is t4, and a propagation delay satisfies one or more of the following cases:
in a case where t1<t2, the propagation delay is [(t3-t4)+T_subframe-(t1-t2)]/2 or mod{[(t3-t4)-(t1-t2)], T_subframe}/2, wherein T_subframe represents a subframe time length, and mod represents a remainder operation; or
in a case where t1>t2, the propagation delay is [(t3-t4)+(t1-t2)]/2.

20. The method according to claim 16, wherein the first time difference is a time difference between the reception time of the first signal and the transmission time of the second signal.

21. The method according to any one of claims 16 to 20, wherein a receiver device of the first information comprises one or more of:
the first terminal device;
the second terminal device;
a positioning server;
a reference terminal device; or
a base station of a serving cell.

22. The method according to claim 21, wherein the base station of the serving cell comprises one or more of:
a base station of a serving cell of the first terminal device;
a base station of a serving cell of the second terminal device;
a base station of a serving cell of a first target terminal device, wherein the first target terminal device is a terminal device in the first terminal device and the second terminal device that first transmits a positioning reference signal during round-trip time (RTT) positioning;
a base station of a serving cell of a second target terminal device, wherein the second target terminal device is a terminal device in the first terminal device and the second terminal device that returns a positioning reference signal during RTT positioning;
a base station of a serving cell of a third target terminal device, wherein the third target terminal device is a terminal device in the first terminal device and the second terminal device that initiates a positioning request; or
a base station of a serving cell of the reference terminal device.

23. The method according to any one of claims 16 to 22, wherein
the first information is reported by the first terminal device to a positioning server; or
the first information is reported by the second terminal device to a positioning server.

24. The method according to any one of claims 16 to 23, wherein the first information belongs to target information for determining the RTT, wherein the target information further comprises one or more of:
second information for indicating a reception and transmission time difference of the first terminal device;
third information for indicating a reception and transmission time difference of the second terminal device; or
fourth information for indicating a signal propagation delay between the first terminal device and the second terminal device.

25. The method according to claim 24, wherein
the second information is reported by the first terminal device to a positioning server, and the third information is reported by the second terminal device to a positioning server; or
the second information and the third information are both reported by the first terminal device to a positioning server; or
the second information and the third information are both reported by the second terminal device to a positioning server; or
the fourth information is determined by the first terminal device based on the second information and the third information, and is reported by the first terminal device to a positioning server; or
the fourth information is determined by the second terminal device based on the second information and the third information, and is reported by the second terminal device to a positioning server.

26. The method according to any one of claims 16 to 25, wherein the first time difference is determined by a synchronization source.

27. The method according to claim 26, wherein the first time difference is determined by the synchronization source based on a first synchronization result and a second synchronization result, wherein the first synchronization result is a synchronization result between the synchronization source and the first terminal device, and the second synchronization result is a synchronization result between the synchronization source and the second terminal device.

28. The method according to claim 27, wherein the first time difference is determined based on a difference between the first synchronization result and the second synchronization result.

29. The method according to any one of claims 16 to 28, wherein the first time difference is reported by one or more of:
the first terminal device;
the second terminal device;
a positioning server;
a positioning reference device; or
a base station.

30. The method according to any one of claims 16 to 29, wherein a report frequency of the first time difference is associated with a movement speed of the first terminal device.

31. A communication device, wherein the communication device is a first device, and the communication device comprises:
a communication module, configured to transmit first information, wherein the first information is used for determining a propagation time between a first terminal device and a second terminal device, and the first information corresponds to a first time period, the first time period comprising a first time difference, the first time difference being determined based on one or more of:
a subframe boundary of the first terminal device;
a subframe boundary of the second terminal device;
a reception time of a first signal;
a transmission time of a second signal; or
a synchronization time difference between the first terminal device and the second terminal device;
wherein the first signal is a reference signal for sidelink positioning transmitted by the first terminal device to the second terminal device, and the second signal is a reference signal for sidelink positioning transmitted by the second terminal device to the first terminal device.

32. The communication device according to claim 31, wherein the first time difference comprises a minimum absolute time difference between the subframe boundary of the first terminal device and the subframe boundary of the second terminal device.

33. The communication device according to claim 31, wherein the first time difference is determined based on the reception time of the first signal and a subframe boundary of a first subframe of the second terminal device, wherein the subframe boundary of the first subframe is a subframe boundary closest to the reception time of the first signal.

34. The communication device according to claim 33, wherein the reception time of the first signal is t1, the subframe boundary of the first subframe closest to the reception time of the first signal is t2, a reception time of the second signal is t3, a subframe boundary of a second subframe closest to a reception time of the second signal is t4, and a propagation delay satisfies one or more of the following cases:
in a case where t1<t2, the propagation delay is [(t3-t4)+T_subframe-(t1-t2)]/2 or mod{[(t3-t4)-(t1-t2)], T_subframe}/2, wherein T_subframe represents a subframe time length, and mod represents a remainder operation; or
in a case where t1>t2, the propagation delay is [(t3-t4)+(t1-t2)]/2.

35. The communication device according to claim 31, wherein the first time difference is a time difference between the reception time of the first signal and the transmission time of the second signal.

36. The communication device according to any one of claims 31 to 35, wherein a receiver device of the first information comprises one or more of:
the first terminal device;
the second terminal device;
a positioning server;
a reference terminal device; or
a base station of a serving cell.

37. The communication device according to claim 36, wherein the base station of the serving cell comprises one or more of:
a base station of a serving cell of the first terminal device;
a base station of a serving cell of the second terminal device;
a base station of a serving cell of a first target terminal device, wherein the first target terminal device is a terminal device in the first terminal device and the second terminal device that first transmits a positioning reference signal during round-trip time (RTT) positioning;
a base station of a serving cell of a second target terminal device, wherein the second target terminal device is a terminal device in the first terminal device and the second terminal device that returns a positioning reference signal during RTT positioning;
a base station of a serving cell of a third target terminal device, wherein the third target terminal device is a terminal device in the first terminal device and the second terminal device that initiates a positioning request; or
a base station of a serving cell of the reference terminal device.

38. The communication device according to any one of claims 31 to 37, wherein
the first information is reported by the first terminal device to a positioning server; or
the first information is reported by the second terminal device to a positioning server.

39. The communication device according to any one of claims 31 to 38, wherein the first information belongs to target information for determining the RTT, wherein the target information further comprises one or more of:
second information for indicating a reception and transmission time difference of the first terminal device;
third information for indicating a reception and transmission time difference of the second terminal device; or
fourth information for indicating a signal propagation delay between the first terminal device and the second terminal device.

40. The communication device according to claim 39, wherein
the second information is reported by the first terminal device to a positioning server, and the third information is reported by the second terminal device to a positioning server; or
the second information and the third information are both reported by the first terminal device to a positioning server; or
the second information and the third information are both reported by the second terminal device to a positioning server; or
the fourth information is determined by the first terminal device based on the second information and the third information, and is reported by the first terminal device to a positioning server; or
the fourth information is determined by the second terminal device based on the second information and the third information, and is reported by the second terminal device to a positioning server.

41. The communication device according to any one of claims 31 to 40, wherein the first time difference is determined by a synchronization source.

42. The communication device according to claim 41, wherein the first time difference is determined by the synchronization source based on a first synchronization result and a second synchronization result, wherein the first synchronization result is a synchronization result between the synchronization source and the first terminal device, and the second synchronization result is a synchronization result between the synchronization source and the second terminal device.

43. The communication device according to claim 42, wherein the first time difference is determined based on a difference between the first synchronization result and the second synchronization result.

44. The communication device according to any one of claims 31 to 43, wherein the first time difference is reported by one or more of:
the first terminal device;
the second terminal device;
a positioning server;
a positioning reference device; or
a base station.

45. The communication device according to any one of claims 31 to 44, wherein a report frequency of the first time difference is associated with a movement speed of the first terminal device.

46. A communication device, wherein the communication device is a second device, and the communication device comprises:
a communication module, configured to receive first information, wherein the first information is used for determining a propagation time between a first terminal device and a second terminal device, and the first information corresponds to a first time period, the first time period comprising a first time difference, the first time difference being determined based on one or more of:
a subframe boundary of the first terminal device;
a subframe boundary of the second terminal device;
a reception time of a first signal;
a transmission time of a second signal; or
a synchronization time difference between the first terminal device and the second terminal device;
wherein the first signal is a reference signal for sidelink positioning transmitted by the first terminal device to the second terminal device, and the second signal is a reference signal for sidelink positioning transmitted by the second terminal device to the first terminal device.

47. The communication device according to claim 46, wherein the first time difference comprises a minimum absolute time difference between the subframe boundary of the first terminal device and the subframe boundary of the second terminal device.

48. The communication device according to claim 46, wherein the first time difference is determined based on the reception time of the first signal and a subframe boundary of a first subframe of the second terminal device, wherein the subframe boundary of the first subframe is a subframe boundary closest to the reception time of the first signal.

49. The communication device according to claim 48, wherein the reception time of the first signal is t1, the subframe boundary of the first subframe closest to the reception time of the first signal is t2, a reception time of the second signal is t3, a subframe boundary of a second subframe closest to a reception time of the second signal is t4, and a propagation delay satisfies one or more of the following cases:
in a case where t1<t2, the propagation delay is [(t3-t4)+T_subframe-(t1-t2)]/2 or mod{[(t3-t4)-(t1-t2)], T_subframe}/2, wherein T_subframe represents a subframe time length, and mod represents a remainder operation; or
in a case where t1>t2, the propagation delay is [(t3-t4)+(t1-t2)]/2.

50. The communication device according to claim 46, wherein the first time difference is a time difference between the reception time of the first signal and the transmission time of the second signal.

51. The communication device according to any one of claims 46 to 50, wherein a receiver device of the first information comprises one or more of:
the first terminal device;
the second terminal device;
a positioning server;
a reference terminal device; or
a base station of a serving cell.

52. The communication device according to claim 51, wherein the base station of the serving cell comprises one or more of:
a base station of a serving cell of the first terminal device;
a base station of a serving cell of the second terminal device;
a base station of a serving cell of a first target terminal device, wherein the first target terminal device is a terminal device in the first terminal device and the second terminal device that first transmits a positioning reference signal during round-trip time (RTT) positioning;
a base station of a serving cell of a second target terminal device, wherein the second target terminal device is a terminal device in the first terminal device and the second terminal device that returns a positioning reference signal during RTT positioning;
a base station of a serving cell of a third target terminal device, wherein the third target terminal device is a terminal device in the first terminal device and the second terminal device that initiates a positioning request; or
a base station of a serving cell of the reference terminal device.

53. The communication device according to any one of claims 46 to 52, wherein
the first information is reported by the first terminal device to a positioning server; or
the first information is reported by the second terminal device to a positioning server.

54. The communication device according to any one of claims 46 to 53, wherein the first information belongs to target information for determining the RTT, wherein the target information further comprises one or more of:
second information for indicating a reception and transmission time difference of the first terminal device;
third information for indicating a reception and transmission time difference of the second terminal device; or
fourth information for indicating a signal propagation delay between the first terminal device and the second terminal device.

55. The communication device according to claim 54, wherein
the second information is reported by the first terminal device to a positioning server, and the third information is reported by the second terminal device to a positioning server; or
the second information and the third information are both reported by the first terminal device to a positioning server; or
the second information and the third information are both reported by the second terminal device to a positioning server; or
the fourth information is determined by the first terminal device based on the second information and the third information, and is reported by the first terminal device to a positioning server; or
the fourth information is determined by the second terminal device based on the second information and the third information, and is reported by the second terminal device to a positioning server.

56. The communication device according to any one of claims 46 to 55, wherein the first time difference is determined by a synchronization source.

57. The communication device according to claim 56, wherein the first time difference is determined by the synchronization source based on a first synchronization result and a second synchronization result, wherein the first synchronization result is a synchronization result between the synchronization source and the first terminal device, and the second synchronization result is a synchronization result between the synchronization source and the second terminal device.

58. The communication device according to claim 57, wherein the first time difference is determined based on a difference between the first synchronization result and the second synchronization result.

59. The communication device according to any one of claims 46 to 58, wherein the first time difference is reported by one or more of:
the first terminal device;
the second terminal device;
a positioning server;
a positioning reference device; or
a base station.

60. The communication device according to any one of claims 46 to 59, wherein a report frequency of the first time difference is associated with a movement speed of the first terminal device.

61. A communication device, comprising: a transceiver, a memory, and a processor, wherein the memory is configured to store one or more programs, and the processor is configured to call the one or more programs stored in the memory and control the transceiver to receive or transmit a signal to cause the communication device to perform the method as defined in any one of claims 1 to 15 or the method as defined in any one of claims 16 to 30.

62. An apparatus, comprising: a processor, wherein the processor is configured to call one or more programs from a memory to cause the apparatus to perform the method as defined in any one of claims 1 to 13 or the method as defined in any one of claims 14 to 26.

63. A chip, comprising: a processor, wherein the processor is configured to call one or more programs from a memory to cause a device equipped with the chip to perform the method as defined in any one of claims 1 to 15 or the method as defined in any one of claims 16 to 30.

64. A computer-readable storage medium, storing one or more programs therein, wherein the one or more programs, when loaded and run by a computer, cause the computer to perform the method as defined in any one of claims 1 to 15 or the method as defined in any one of claims 16 to 30.

65. A computer program product, comprising one or more programs therein, wherein the one or more programs, when loaded and run by a computer, cause the computer to perform the method as defined in any one of claims 1 to 15 or the method as defined in any one of claims 16 to 30.

66. A computer program, wherein the computer program, when loaded and run by a computer, causes the computer to perform the method as defined in any one of claims 1 to 15 or the method as defined in any one of claims 16 to 30.
